# EUROPÄISCHE PATENTSCHRIFT

(11) **EP 2 245 330 B1**
(45) Veröffentlichungstag und Bekanntmachung des Hinweises auf die Patenterteilung: **21.11.2012**
(21) Anmeldenummer: 08868018.6
(22) Anmeldetag: 23.09.2008
(51) Int. Cl.: F16D 65/12

(54) **BREMSSCHEIBE UND VERFAHREN ZU DEREN HERSTELLUNG**
BRAKE DISC AND METHOD FOR THE PRODUCTION THEREOF
DISQUE DE FREIN ET SON PROCÉDÉ DE PRODUCTION

(30) Priorität: 21.12.2007 DE 102007061954
(43) Veröffentlichungstag der Anmeldung: 03.11.2010
(73) Patentinhaber: Daimler AG, 70327 Stuttgart (DE)
(72) Erfinder: BOTSCH, Siegfried, 71120 Grafenau (DE); LESCH, Martin, 71336 Waiblingen (DE); QUINGER, Christian, 73614 Schorndorf (DE); SALEWSKI, Thomas, 73650 Winterbach (DE); JÄCKEL, Klaus, 89278 Nersingen (DE); OKTAY, LLhan, 73061 Ebersbach (DE); WILKE, David, 71573 Allmersbach im Tal (DE)
(74) Vertreter: JENSEN & SON
(86) Internationale Anmeldenummer: PCT/EP2008/008021
(87) Internationale Veröffentlichungsnummer: WO 2009/083048

(56) Entgegenhaltungen:
- EP-A- 1 162 384
- EP-A- 1 903 248
- DE-A1- 3 536 465

## Beschreibung

Die Erfindung betrifft eine Bremsscheibe für ein Kraftfahrzeug sowie ein Verfahren zu deren Herstellung der in den Oberbegriffen der Patentansprüche 1 bzw. 7 angegebenen Art.

Aus dem Stand der Technik sind bereits eine Vielzahl von Bremsscheiben bzw. Verfahren zu deren Herstellung als bekannt zu entnehmen, welche aus einem Gusswerkstoff in einem einzigen Verfahrensschritt gegossen werden. Derartige einfache Bremsscheiben haben aber insbesondere den Nachteil eines hohen Eigengewichts. Aus diesem Grund ist es seit einiger Zeit üblich, gebaute Bremsscheiben einzusetzen, welche im Wesentlichen aus einem Bremsscheibentopf und einem von diesem getragenen Reibring bestehen. Dieser hat insbesondere den Vorteil, dass die an den unterschiedlichen Stellen der Bremsscheibe erforderlichen Eigenschaften besser eingestellt werden können. So kann der Bremsscheibentopf, welcher üblicherweise aus einem Stahlwerkstoff besteht, entsprechend hinreichend nachgiebig gestaltet werden, so dass sich im Fahrbetrieb des Kraftfahrzeugs kein Verschleiß sowie Wärme- oder Spannungsrisse ergeben. Der Reibring hingegen kann insbesondere so gebaut werden, dass er gute verschleißfeste Eigenschaften hat.

Eine besondere Problematik bei derartigen gebauten Bremsscheiben besteht jedoch in der Verbindung des Bremsscheibentopfs mit dem Reibring. Wird beispielsweise eine Kombination eines Reibrings aus einem Gusswerkstoff, insbesondere einem Grauguss, und einem Bremsscheibentopf aus einem Stahlwerkstoff gewählt, so entsteht beim Verschweißen der Teile - je nach Materialpaarung - auf Seiten des Gusswerkstoffs häufig ein zementitisches und sprödes Gefüge, was ersichtlichermaßen der Standfestigkeit der Bremsscheibe abträglich ist.

Aus diesem Grund ist beispielsweise aus der DE 100 24 819 A1 bereits eine Bremsscheibe sowie ein Verfahren zu deren Herstellung als bekannt zu entnehmen, bei welchen ein Reibring aus Grauguss und ein Bremsscheibentopf aus einem Aluminiumwerkstoff durch Magnetpulsschweißen bzw. elektromagnetisches Umformen miteinander derart verbunden werden, dass eine metallurgische Verbindung entsteht.

Aus der DE 35 36 465 A1 ist eine Bremsscheibe für eine innen umgreifende Scheibenbremse eines Kraftfahrzeuges bekannt. Sie weist einen Gussbremsring auf sowie einen Blech-Bremsscheibenträger mit Verbindungsabschnitt über den er im Bereich des Außenumfanges des Bremsringes verbunden ist. Nicht gezeigt ist, daβ das Zwischenbanteil innenumfangseitig mit eingegossen ist und als Zwischenving mit Kragen ausgebildet ist, welcher gegenüber einer Stirn seite des zugeordneten Reibrungkörpers izur Seite des Bremsscheibentopks überstekt

Die EP 1 903 248 A1 offenbart einen Stand der Tedivik nack Artikel 54(3) EPE mit einer Bremsscheibe in Verbundbauweise mit einem als Gussteil ausgebildeten Bremsring und einem darin gießtechnisch teilweise eingebetteten Bremsringträger. Nicht gezeigt ist, daβ ein Zwisdenbauteil in einen von zwei Reibrungkörpern mit eingegessen ist.

Aufgabe der vorliegenden Erfindung ist es, eine Bremsscheibe sowie ein Verfahren zu deren Herstellung der in den Oberbegriffen der Patentansprüche 1 bzw. 5 angegebenen Art zu schaffen, bei welchen eine noch verbesserte Schweißverbindung zwischen dem Reibring und dem Bremsscheibentopf hergestellt werden kann.

Diese Aufgabe wird erfindungsgemäß durch eine Bremsscheibe sowie ein Verfahren zu deren Herstellung mit den Merkmalen der Patentansprüche 1 bzw. 5 gelöst. Vorteilhafte Ausgestaltungen mit zweckmäßigen und nicht-trivialen Weiterbildungen der Erfindung sind in den übrigen Patentansprüchen angegeben.

Im Ergebnis kann somit eine gebaute Bremsscheibe erreicht werden, welche insbesondere im Verbindungsbereich zwischen dem Bremsscheibentopf und dem Reibring in optimierter Weise verbunden ist, um insbesondere bei hohen Belastungen im Fahrbetrieb eine entsprechende Verschleißbeständigkeit bzw. das Entstehen von Rissen oder dergleichen zu vermeiden.

In Ausgestaltung der Erfindung weist der Zwischenring im Verbindungsbereich zu dem Gusswerkstoff des Reibrings Mittel zum Herstellen einer formschlüssigen Verbindung auf. Hierdurch wird insbesondere eine optimale Verbindung des eingegossenen Zwischenbauteils bzw. Zwischenrings zu dem Gusswerkstoff des Reibrings erreicht.

Als weiterhin vorteilhaft hat es sich gezeigt, wenn der Zwischenring mit einer Schicht, insbesondere einer Zinnschicht, mit vorzugsweise einer Schichtdicke von etwa 1 bis 30 µm, versehen ist. Eine derartige, beispielsweise galvanisch aufgebrachte Schicht ermöglicht insbesondere eine besonders gute Anbindung des Zwischenrings an den Reibring bzw. den Bremsscheibentopf.

Aufgrund der Rotationssymmetrie eignet sich in weiterer Ausgestaltung der Erfindung zum Fügen des Zwischenbauteils und dem Bremsscheibentopf eine Reibschweißung. Alternativ hierzu ist in weiterer Ausgestaltung der Erfindung auch denkbar, eine Induktivscheißung bzw. Pressschweißung einzusetzen.

Die vorstehend im Zusammenhang mit der erfindungsgemäßen Bremsscheibe beschriebenen Vorteile gelten in ebensolcher Weise für das Herstellungsverfahren gemäß Patentanspruch 5.

Dieses zeichnet sich in weiterer Ausgestaltung der Erfindung insbesondere dadurch aus, dass der Reibring mit dem Zwischenbauteil und der Bremsscheibentopf vor dem Herstellen der Fügverbindung durch Schweißen zumindest im Wesentlichen fertig bearbeitet werden können. Die Fertigbearbeitung der einzelnen Komponenten der Bremsscheibe ist erfahrungsgemäß einfacher zu handhaben, als der Zusammenbau aus Bremsscheibentopf und Reibring bzw. Zwischenbauteil.

Diese vorbeschriebene Schicht, insbesondere Zinnschicht, wird in weiterer Ausgestaltung der Erfindung vor dem Eingießen in den Reibring auf den Zwischenring aufgebracht. Es kann beispielsweise durch ein einfach zu handhabendes galvanisches Spritzbeschichten vor dem Eingießen in den Reibring erfolgen.

Weitere Vorteile, Merkmale und Einzelheiten der Erfindung ergeben sich aus der nachfolgenden Beschreibung eines bevorzugten Ausführungsbeispiels sowie anhand der Zeichnungen; diese zeigen in:

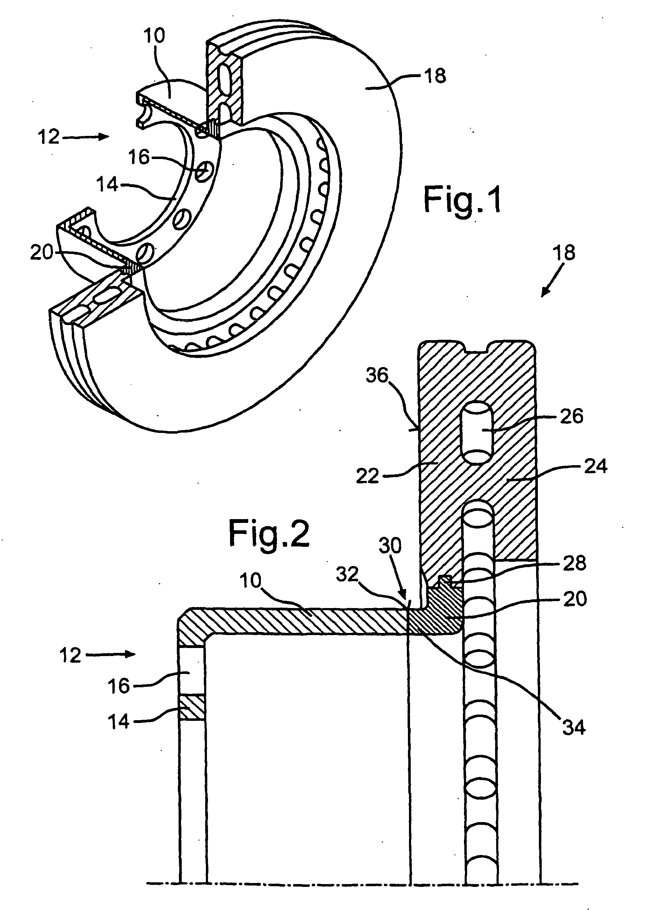

- Fig. 1: eine Perspektivansicht auf eine erfindungsgemäße Bremsscheibe für ein Kraftfahrzeug, insbesondere einen Nutzkraftwagen, mit einem Bremsscheibentopf zum Befestigen der Bremsscheibe an einer Radnabe und zur Halterung eines aus einem Gusswerkstoff bestehenden Reibrings, welcher über eine Fügverbindung in form einen Schweißverbindung mit dem Bremsscheibentopf verbunden ist, wobei in den Reibring ein Zwischenbauteil eingegossen ist, über welches der Reibring mit dem Bremsscheibentopf verbunden ist; und in
- Fig. 2: eine Schnittansicht auf die Bremsscheibe gemäß Fig. 1, wobei insbesondere das als Zwischenring ausgebildete Zwischenbauteil erkennbar ist, welches in den Reibring eingegossen ist und über welches der Reibring mit dem Bremsscheibentopf verschweiß ist.

In Fig. 1 ist in einer Perspektivansicht ausschnittsweise geschnitten eine Bremsscheibe für ein Kraftfahrzeug, im vorliegenden Fall ein Lastkraftwagen, dargestellt. Die Bremsscheibe umfasst einen im Wesentlichen zylinderförmigen Bremsscheibentopf 10, welcher an seiner einen Stirnseite 12 mit einem ringförmigen Flansch 14 zur Befestigung an einer nicht dargestellten radnabenseitigen Aufnahme ausgebildet ist. Hierzu weist der Flansch 14 eine Mehrzahl von radial verteilten Durchgangsöffnungen 16 auf. Der Bremsscheibentopf 10 besteht vorliegend aus einem Stahlwerkstoff, welcher entsprechend günstige duktile Werkstoff- und Festigkeitseigenschaften hat.

Auf seiner dem Flansch 14 abgewandten Seite ist der Bremsscheibentopf 10 auf im Weiteren noch näher beschriebene Weise mit einem Reibring 18 verbunden, welcher vorliegend aus einem Gusswerkstoff, beispielsweise Grauguss, besteht.

In Zusammenschau mit Fig. 2, welche eine ausschnittsweise und axial Schnittansicht der Bremsscheibe gemäß Fig. 1 zeigt, wird erkennbar, dass im Anbindungsbereich des Bremsscheibentopfs 10 an den Reibring 18 ein Zwischenbauteil 20 in Form eines Zwischenrings vorgesehen ist. Dieser Zwischenring ist am Innenumfang der Bremsscheibe bzw. des Reibrings 18 bei dessen Gießvorgang mit eingegossen worden. Genauer gesagt ist das Zwischenbauteil 20 in einen von zwei Reibringkörpern 22, 24 innenumfangsseitig mit eingegossen worden, wobei der das Zwischenbauteil 20 aufnehmende Reibringkörper 22 dem Bremsscheibentopf 10 zugewandt ist. Die beiden Reibringkörper 20, 22 sind einteilig miteinander über eine Mehrzahl von Zwischenstegen 26 verbunden, welche die Innenbelüftung des Reibrings 18 gewährleisten.

Das als Zwischenring gestaltete Zwischenbauteil 20 weist dabei als Mittel zum Herstellen einer formschlüssigen Verbindung mit dem Gusswerkstoff des Reibrings 18 einen außenumfangsseitig umlaufenden Steg 28 auf. Dieser Steg 28 gewährleistet insbesondere in Axialrichtung des Reibrings 18 bzw. der Bremsscheibe eine besonders günstige Anbindung des Zwischenbauteils 20.

Das Zwischenbauteil 20 besteht im vorliegenden Fall aus einem Stahlwerkstoff, der in seinen Materialeigenschaften insbesondere auf diejenigen des Bremsscheibentopfs 10 abgestimmt ist. Hierdurch ist es auf einfache Weise möglich, in einem Fügbereich 30 zwischen dem Bremsscheibentopf 10 und dem reibringseitigen Zwischenbauteil 20 eine entsprechende Fügverbindung in Form einer Schweißverbindung 32 vorzusehen.

Als Schweißverbindung eignet sich im vorliegenden Fall insbesondere eine Reibschweißung oder eine Induktivschweißung.

Insbesondere aus Fig. 2 ist zudem erkennbar, dass das Zwischenbauteil 20 in Form des Zwischenrings einen Kragen 34 aufweist, welcher gegenüber einer Stirnseite 36 des Reibrings 18 bzw. des zugeordneten Reibringkörpers 22 zur Seite des Bremsscheibentopfs übersteht. Dies ermöglicht eine besonders günstige Schweißverbindung 32 zwischen dem Bremsscheibentopf 10 und dem Zwischenbauteil 20.

Im vorliegenden Fall ist der Zwischenring mit einer Schicht, insbesondere einer Zinnschicht mit vorzugsweise einer Schichtdicke von etwa 1 bis 30 µm versehen, welche beispielsweise durch galvanisches Spritzbeschichten auf die Oberfläche des Zwischenbauteils 20 aufgebracht wird. Hierdurch ergibt sich eine besonders günstige Anbindung zum Reibring 18 bzw. zum Bremsscheibentopf 10.

Die Herstellung der Bremsscheibe erfolgt folgendermaßen:

Zunächst wird im vorliegenden Fall auf den Zwischenring die vorbeschriebene Schicht, insbesondere die Zinnschicht, durch entsprechendes galvanisches Spritzbeschichten oder ein anderes Beschichtungsverfahren aufgebracht. Im Anschluss daran erfolgt das Gießen des Reibrings 18 und damit einhergehend das Eingießen des des Zwischenrings in den Reibring 18.

Bevor die Bremsscheibe zusammmengebaut wird, werden einerseits der Reibring 18 mit dem Zwischenbauteil 20 und andererseits der Bremsscheibentopf 10 zumindest im Wesentlichen fertig bearbeitet. Dies hat insbesondere den Vorteil, dass die beiden Einzelteile des Zusammenbaus der Bremsscheibe - einerseits der Reibring 18 mit dem Zwischenbauteil 20 und andererseits der Bremsscheibentopf 10 - besonders günstig und einfach bearbeitet werden können.

Nach dieser Fertigbearbeitung erfolgt dann der Fügprozess des Bremsscheibentopfs 10 mit dem Zwischenbauteil 20, um hierdurch eine Schweißverbindung zwischen dem Reibring 18 und dem Bremsscheibentopf 10 herzustellen. Im vorliegenden Fall kann diese Schweißverbindung 32 beispielsweise durch Reibschweißen oder durch Induktivscheißen erfolgen. Natürlich sind auch andere Schweißverfahren denkbar.

Insgesamt ist somit aus den Fig. 1 und 2 erkennbar, dass eine besonders günstige Möglichkeit geschaffen ist, den aus einem Gusswerkstoff, beispielsweise einem GG-15 oder GG-20 bestehenden Reibring 18 mit dem aus einem Stahlwerkstoff bestehenden Bremsscheibentopf 10 geschaffen ist, nämlich unter Vermittlung des Zwischenbauteils 20, welches seinerseits in den Gusswerkstoff des Reibrings 18 mit eingegossen ist. Das eingegossene Zwischenbauteil 20 kann somit auf besonderes günstige Weise an den Werkstoff des Bremsscheibentopfs 10 angepasst werden, welcher vorliegend aus einem Stahlwerkstoff mit entsprechend höherer Zugfestigkeit und damit einhergehender kleinerer Dimensionierung und kleinerer Wandstärken bestehen kann. Hierdurch kann insgesamt das Gewicht der jeweiligen Bremsscheibe deutlich reduziert werden, ohne dass Einbußen in der Verbindung des Bremsscheibentopfs 10 mit dem Reibring 18 folgen würden.

Insgesamt kann somit eine Bremsscheibe geschaffen werden, welche während eines Bremsvorgangs den mit der dabei entstehenden Bremswärme einhergehenden Ausdehnungen und inneren Spannungen besonders gut standhält.

Im vorliegenden Fall erfolgt das Eingießen des Zwischenbauteils 20 in den Reibring 18 auf dem Wege eines Verbundguss-Verfahrens. Natürlich wären hier auch andere Verfahren denkbar.

### Bezugszeichenliste

- 10: Bremsscheibentopf
- 12, 36: Stirnseite
- 14: Flansch
- 16: Durchgangsöffnung
- 18: Reibring
- 20: Zwischenbauteil
- 22, 24: Reibringkörper
- 26: Zwischenstegen
- 28: Steg
- 30: Fügebereich
- 32: Schweißverbindung
- 34: Kragen

## Patentansprüche

1. Bremsscheibe für ein Kraftfahrzeug mit einem Bremsscheibentopf (10) und mit einem von diesem getragenen, aus einem Graugusswerkstoff bestehenden Reibring (18), welche über eine Fügverbindung mittels einer Schweißverbindung (32) miteinander verbunden sind, wobei
in den Reibring (18) ein Zwischenbauteil (20) eingegossen ist, über welches der Reibring (18) mit dem Bremsscheibentopf (10) verbunden ist
wobei das Zwischenbauteil (20) in einen von zwei Reibringkörpern (22, 24) innenumfangsseitig mit eingegossen worden ist, wobei der das Zwischenbauteil (20) aufnehmende Reibringkörper (22) dem Bremsscheibentopf (10) zugewandt ist, und das Zwischenbauteil 20 in Form eines Zwischenrings einen Kragen (34) aufweist, welcher gegenüber einer Stirnseite (36) des zugeordneten Reibringkörpers (22) zur Seite des Bremsscheibentopfs übersteht,
und wobei oder Zwischenring sowie der Bremsscheibentopf (10) aus einem Stahlwerkstoff bestehen.

2. Bremsscheibe nach Auspruch 1, **dadurch gekennzeichnet, dass**
das der Zwischenring im Verbindungsbereich zu dem Gusswerkstoff des Reibrings ein Mittel (28) zum Herstellen einer formschlüssigen Verbindung aufweist.

3. Bremsscheibe nach einem der Ansprüche 1 oder 2,
**dadurch gekennzeichnet, dass**
das der Zwischenring mit einer Schicht, insbesondere einer Zinnschicht mit vorzugsweise einer Schichtdicke von etwa 1 bis 30 µm, versehen ist.

4. Bremsscheibe nach einem der Ansprüche 1 bis 3,
**dadurch gekennzeichnet, dass**
das der Zwischenring durch eine Reibschweißung oder eine Induktivschweißung mit dem Bremsscheibentopf (10) verbunden ist.

5. Verfahren zum Herstellen einer Bremsscheibe für ein Kraftfahrzeug, nach einem der Ansprüche 1 bis 6, bei welchem der Bremsscheibentopf (10) und der von diesem getragener, aus einem Graugusswerkstoff bestehende Reibring (18) über die Schweißverbindung (32) miteinander verbunden werden, **gekennzeichnet durch** folgende Schritte:
- Eingießen eines Zwischenbauteils (20) in dem Reibring (18):
- Herstellen der Schweißverbindung (32) zwischen dem Zwischenbauteil (20) des Reibrings (18) und dem Bremsscheibentopf (10).

6. Verfahren nach Anspruch 5,
**dadurch gekennzeichnet, dass**
der Reibring (18) mit dem Zwischenring (20) und der Bremsscheibentopf (10) vor dem Herstellen der
Schweißverbindung (32), zumindest im Wesentlichen fertig bearbeitet werden.

7. Verfahren nach Anspruch 5 oder 6,
**dadurch gekennzeichnet, dass** der Zwischenring (20) vor dem Eingießen in den Reibring (18) mit einer Schicht, insbesondere einer Zinnschicht mit vorzugsweise einer Schichtdicke von etwa 1 bis 30 µm, versehen wird.

8. Verfahren nach Anspruch 7,
**dadurch gekennzeichnet, dass**
die Schicht, insbesondere die Zinnschicht, durch galvanisches Spritzbeschichten aufgebracht wird.

## Claims

1. Brake disc for a motor vehicle, comprising a brake disc pot (10) and a friction ring (18) supported thereon and made of a grey cast iron material, these parts being joined to each other in a joining process by means of a welded joint (32), wherein an intermediate component (20) is cast into the friction ring (18) to join the friction ring (18) to the brake disc pot (10),
wherein the intermediate component (20) is cast into one of two friction ring bodies (22, 24) on the inner circumferential side, wherein the friction ring body (22) accommodating the intermediate component (20) faces the brake disc pot (10) and wherein the intermediate component (20) in the form of an intermediate ring has a collar (34) which projects from an end face (36) of the associated friction ring body (22) towards the side of the brake disc pot (10),
and wherein the intermediate ring and the brake disc pot (10) are made of a steel material.

2. Brake disc according to claim 1,
**characterised in that**
the intermediate ring has a means (28) for establishing a positive connection in a joint region towards the cast material of the friction ring.

3. Brake disc according to claim 1 or 2,
**characterised in that**
the intermediate ring is provided with a layer, in particular with a tin layer with a thickness of preferably approximately 1 to 30 µm.

4. Brake disc according to any of claims 1 to 3,
**characterised in that**
the intermediate ring is joined to the brake disc pot (10) by friction welding or induction welding.

5. Method for producing a brake disc for a motor vehicle according to any of claims 1 to 4, wherein the brake disc pot (10) and the friction ring (18) supported thereon and made of a grey cast iron material are joined to each other by means of a welded joint (32),
**characterised by** the following steps:
- casting an intermediate component (20) into the friction ring (18);
- establishing the welded joint (32) between the intermediate component (20) of the friction ring (18) and the brake disc pot (10).

6. Method according to claim 5,
**characterised in that**
the friction ring (18) with the intermediate ring (10) and the brake disc pot (10) are at least substantially finished before the welded joint (32) is established.

7. Method according to claim 5 or 6,
**characterised in that**
before being cast into the friction ting (18), the intermediate ring (10) is provided with a layer, in particular with a tin layer with a thickness of preferably approximately 1 to 30 µm.

8. Method according to claim 7,
**characterised in that**
the layer, in particular the tin layer, is applied by galvanic spray coating.

## Revendications

1. Disque de frein pour un véhicule automobile qui comprend un pot de disque de frein (10) (10) et un anneau de friction (18) porté par le pot et constitué d'un matériau de moulage en fonte grise,
lesquels étant reliés l'un à l'autre par une liaison d'assemblage au moyen d'une soudure (32), un élément intermédiaire (20) étant coulé dans l'anneau de friction (18) et sert à relier l'anneau de friction (18) au pot de disque de frein (10), l'élément intermédiaire (20) ayant été moulé dans un des deux corps d'anneau de friction (22, 24), côté périphérie intérieure, le corps d'anneau de friction (22) logeant l'élément intermédiaire (22) étant orienté vers le pot de disque de frein (10),
et l'élément intermédiaire (20) sous forme d'une bague intermédiaire présente un rebord (34) lequel dépasse par rapport à une surface avant (36) du corps d'anneau de friction (22) associé sur le côté du pot de disque de frein, et l'anneau intermédiaire ainsi que le pot de disque de frein (10) étant fabriqués en acier.

2. Disque de frein selon la revendication 1, **caractérisé en ce que** l'anneau intermédiaire dans la zone de liaison avec le matériau de fonte de l'anneau de friction présente un moyen (28) servant à fabriquer une liaison positive.

3. Disque de frein selon l'une quelconque des revendications précédentes de 1 à 2, **caractérisé en ce que** l'anneau intermédiaire est pourvue d'une couche, en particulier une couche d'étain dont l'épaisseur est de préférence environ entre 1 à 30 µm.

4. Disque de frein selon la revendication 1 à 3, **caractérisé en ce que** l'anneau intermédiaire est relié au pot de disque de frein (10) par une soudure de friction ou une soudure inductive.

5. Procédé de fabrication d'un disque de frein pour un véhicule, selon l'une quelconque des revendications 1 à 6, selon lequel le pot de disque de frein (10) et l'anneau de friction (18) porté par ledit pot et constitué d'un matériau de moulage en fonte grise, sont reliés ensemble par une liaison d'assemblage par soudure, **caractérisé par** les étapes suivantes :
- coulage d'un élément intermédiaire (20) dans l'anneau de friction (18) ;
- Fabrication d'une liaison d'assemblage par soudure (32) entre l'élément intermédiaire (20) de l'anneau de friction (18) et le pot de disque de frein (10).

6. Procédé selon la revendication 5, **caractérisé en ce que** l'anneau de friction (18) avec l'anneau intermédiaire (20) et le pot de disque de frein (10) sont du moins essentiellement façonnés avant la fabrication de la liaison d'assemblage par soudure (32).

7. Procédé selon la revendication 5 ou 6, **caractérisé en ce qu'**avant le coulage, l'anneau intermédiaire (20) est pourvue d'une couche, en particulier une couche d'étain dont l'épaisseur est de préférence environ entre 1 à 30 µm.

8. Procédé selon la revendication 7, **caractérisé en ce que** la couche, en particulier la couche d'étain est appliquée par pulvérisation par couche galvanique.
